(19) Europäisches Patentamt
European Patent Office
Office européen des brevets

(11) **EP 1 958 802 B1**

(12) **EUROPÄISCHE PATENTSCHRIFT**

(45) Veröffentlichungstag und Bekanntmachung des Hinweises auf die Patenterteilung:
**17.03.2010 Patentblatt 2010/11**

(21) Anmeldenummer: **08000910.3**

(22) Anmeldetag: **18.01.2008**

(51) Int Cl.:
*B60G 11/52* (2006.01)  *B60G 17/02* (2006.01)
*B62K 25/06* (2006.01)  *F16F 3/10* (2006.01)
*B60G 15/06* (2006.01)  *F16F 1/12* (2006.01)

(54) **Fahrzeug, insbesondere Motorrad, mit einem Federbein mit einstellbarer Federrate**

Vehicle, in particular motorcycle, with a suspension strut with adjustable spring rate

Véhicule, en particulier motocyclette, doté d'une jambe de force avec constante de ressort réglable

(84) Benannte Vertragsstaaten:
**DE FR GB IT**

(30) Priorität: **16.02.2007 DE 102007007630**

(43) Veröffentlichungstag der Anmeldung:
**20.08.2008 Patentblatt 2008/34**

(73) Patentinhaber: **Bayerische Motoren Werke Aktiengesellschaft**
**80809 München (DE)**

(72) Erfinder: **Priese, Jens**
**85774 München (DE)**

(56) Entgegenhaltungen:
**DE-A1- 3 827 760      DE-A1- 10 318 538**
**DE-B3- 10 336 155     DE-U1- 29 514 552**
**US-A- 4 248 410       US-A- 4 415 146**
**US-A- 4 475 722**

EP 1 958 802 B1

**Beschreibung**

Die vorliegende Erfindung betrifft ein Fahrzeug, insbesondere ein Motorrad, gemäß dem Oberbegriff des Patentanspruches 1.

Abgesehen von Fahrzeugen mit Luftfederung werden derzeit in Kraftfahrzeugen üblicherweise Federbeine mit konstanter Federrate verbaut. Um die Fahrlage an die sich ändernde Beladung des Fahrzeugs anzupassen wird üblicherweise die Federvorspannung verstellt. Viele Motorräder weisen derartige Federbeine auf, bei denen die Federvorspannung einstellbar ist. Manche Motorräder weisen an ihren Federbeinen auch so genannte "Zuschaltfedern" auf, wobei die Zusatzfeder bei Soziusbetrieb bzw. bei Solofahrt mit schwerem Gepäck "zugeschaltet" wird.

Da sich die vertikaldynamischen Eigenschaften eines Fahrzeugs in Abhängigkeit vom Beladungszustand ändern, wäre es wünschenswert, wenn man die Federrate der Gesamtfahrzeugmasse entsprechend anpassen könnte. Dadurch ließe sich der Fahrkomforts und die Fahrsicherheit verbessern.

Ein solcher Federbein mit einer durch eine Sperreinrichtung einstellbaren Federrate wird in Dokument US 4 248 410 beschrieben.

Aufgabe der Erfindung ist es, ein Fahrzeug, insbesondere ein Motorrad mit einem Federbein zu schaffen, dessen Federrate in konstruktiv einfacher Weise einstellbar ist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist ein Fahrzeug, insbesondere ein Motorrad, mit einem Federbein, das eine Spiralfeder und eine seriell, d. h. in Reihe zu der Spiralfeder angeordnete "Elastomerfedereinrichtung" aufweist. Die Elastomerfedereinrichtung weist mindestens ein seriell zu der Spiralfeder angeordnetes Elastomerelement und mindestens eine dem Elastomerelement zugeordnete Sperreinrichtung auf. Vorzugsweise ist die Elastomerfedereinrichtung durch mehrere seriell angeordnete Elastomerelemente und zugeordnete Sperreinrichtungen gebildet. Die mindestens eine Sperreinrichtung ist dazu vorgesehen, in einer "Freigabe- oder Federstellung" eine Kompression des zugeordneten "Elastomerelements" zu ermöglichen bzw. in einer "Sperrstellung" eine Kompression des zugeordneten Elastomerelements zu sperren, bzw. zu unterbinden.

Der Kern der Erfindung besteht darin, dass die mindestens eine Sperreinrichtung in einer Radialrichtung des Federbeins von der "Freigabe- oder Federstellung" in die "Sperrstellung" verschiebbar ist, und umgekehrt, wobei in der Sperrstellung eine in das Federbein eingeleitete Federbeinkraft mittels der Sperreinrichtung an dem zugeordneten Elastomerelement vorbei geleitet wird. Die Federrate des Federbeins ist somit durch die Federrate der Spiralfeder und die Federraten der "nicht gesperrten" Elastomerelemente bestimmt, wobei unter Vernachlässigung von Reibungsverlusten für die Federrate $C_{GES}$ die bekannte Gesetzmäßigkeit gilt:

$$\frac{1}{C_{GES}} = \frac{1}{C_{Spiralfeder}} + \frac{1}{C_{Elastomerelement 1}} + \ldots + \frac{1}{C_{Elastomerelement n}}.$$

Je größer die Anzahl der Elastomerelemente der Elastomerfedereinrichtung, umso feinstufiger kann die Federhärte des Federbeins eingestellt werden.

Unter den Begriff "Elastomerelement" wird ganz allgemein ein hinreichend langlebiges, elastisches Element verstanden, das z. B. aus Gummi, aus Kunststoff, insbesondere einem Polymer, bestehen kann.

Nach einer Weiterbildung der Erfindung weist die Elastomerfedereinrichtung ein Gehäuse auf, in dem das mindestens eine Elastomerelement und die zugeordnete Sperreinrichtung angeordnet ist. Bei dem Gehäuse kann es sich um ein ringzylindrisches Gehäuse handeln, wobei die Sperreinrichtung in einer Radialrichtung des Gehäuses verschiebbar sein kann. Eine ringzylindrische Gehäuseform hat den Vorteil, dass das Gehäuse koaxial zur Längsrichtung der Spiralfeder angeordnet sein kann. Wie bei vielen herkömmlichen Federbeinen üblich, kann die Spiralfeder "um ein Dämpfergehäuse herum" angeordnet sein. Das koaxial zur Spiralfeder angeordnete ringzylindrische Gehäuse kann ebenfalls das Dämpfergehäuse umschließen.

Wie bereits erwähnt, können mehrere seriell hintereinander angeordnete Elastomerelemente vorgesehen sein. Diese können "hintereinander" in dem ringzylindrischen Gehäuse angeordnet sein. Vorzugsweise ist jedem der Elastomerfederelemente jeweils eine separate in einer Radialrichtung des ringzylindrischen Gehäuses verschiebbare Sperreinrichtung zugeordnet.

Nach einer Weiterbildung der Erfindung ist vorgesehen, dass die Sperreinrichtungen jeweils durch mindestens zwei Elemente gebildet sind, nämlich durch ein erstes in Radialrichtung im wesentlichen unverschiebliches Sperrelement und ein zweites in Radialrichtung verschiebliches Sperrelement, das mit dem ersten Sperrelement in Eingriff gebracht werden kann.

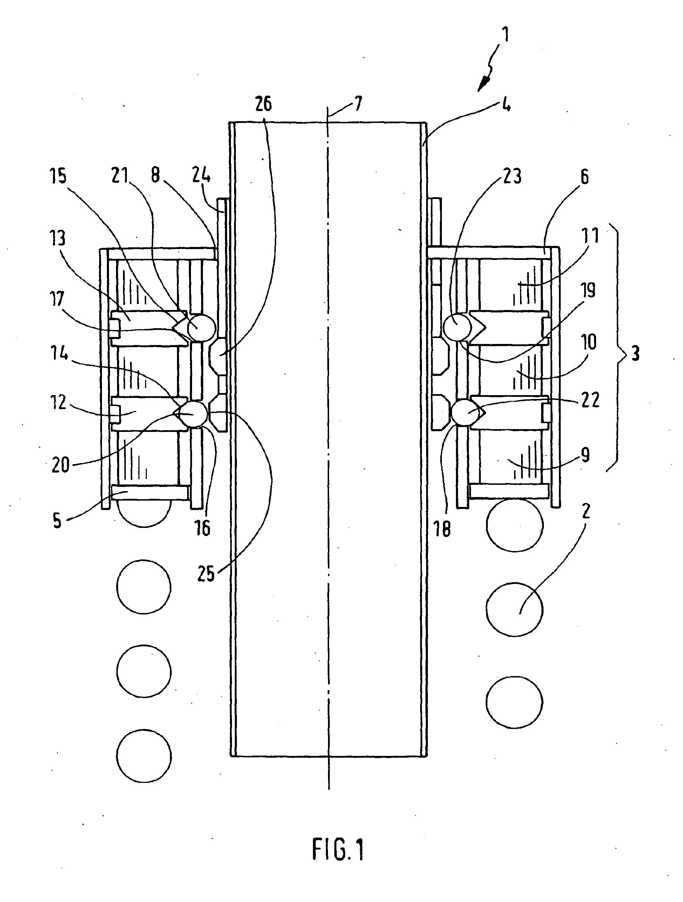

Im Folgenden wird die Erfindung im Zusammenhang mit der Zeichnung näher erläutert. Die einzige Figur 1 zeigt ein Ausführungsbeispiel gemäß der Erfindung.

Figur 1 zeigt ein Federbein 1 mit einer Spiralfeder 2 und einer Elastomerfedereinrichtung 3, die seriell, d. h. in Reihe zu der Spiralfeder 2 angeordnet ist. Innerhalb der Spiralfeder 2 und der Elastomerfedereinrichtung 3 ist ein Dämpfer angeordnet, der hier nur schematisch durch sein Dämpfergehäuse 4 angedeutet ist. Das untere Ende der Spiralfeder ist durch einen hier nicht näher dargestellten Federteller abgestützt. Das obere Ende der Spiralfeder 2 ist durch einen oberen Federteller 5 abgestützt.

Im Folgenden wird die Elastomerfedereinrichtung 3 näher beschrieben. Die Elastomerfedereinrichtung 3 weist ein ringzylindrisches Gehäuse 6 auf, das eine zur Federbeinlängsrichtung 7 konzentrische kreisförmige Ausnehmung 8 aufweist.

In dem ringzylindrischen Gehäuse 6 sind drei ringförmige elastische Polymerfedern 9, 10, 11 in Reihe hintereinander angeordnet. Die Polymerfeder 9 ist von unten her durch den oberen Federteller 5 abgestützt. Zwischen der Polymerfeder 9 und der Polymerfeder 10 ist ein ringförmiger Zwischenteller 12 angeordnet. Dementsprechend ist zwischen der Polymerfeder 10 und der Polymerfeder 11 ein ringförmiger Zwischenteller 13 angeordnet. Die Zwischenteller 12, 13 sind an ihrem Außenumfang gleitend in dem Gehäuse 6 geführt. Die radialen Innenseiten der Zwischenteller 12, 13 weisen jeweils eine umlaufende nutartige, V-förmige Einkerbung 14, 15 auf. Die "obere" Polymerfeder 11 stützt sich an der oberen Wand des Gehäuses 6 der Elastomerfedereinrichtung 3 ab.

Die radial innere Gehäusewand des ringzylindrischen Gehäuses 6 der Elastomerfedereinheit 3 weist "in Höhe" der Zwischenteller 12, 13 Durchgangsöffnungen bzw. -bohrungen 16, 17, 18, 19 auf, in die Kugeln 20 - 23 eingesetzt sind. Die Kugeln 20-23 können in radialer Richtung verschoben werden. Die Kugeln 20 - 23 stehen dabei stets in Eingriff mit den Durchgangsbohrungen 16- 19.

Die Kugeln 20, 22 sind radial nach außen verschoben und in die zugeordnete V-förmige Einkerbung 14 des Zwischentellers 12 eingerastet. Der Zwischenteller 12 ist somit gegen eine Verschiebung in Federbeinlängsrichtung 7 blockiert. Folglich wird in der in Figur 1 gezeigten "Schaltstellung" eine Federbeinkraft lediglich von der Spiralfeder 2 und der Polymerfeder 9 aufgenommen, nicht aber von den nachfolgenden Polymerfedern 10, 11. Der Zwischenteller 12 und die Kugeln 20, 22 leiten die Federbeinkraft nämlich an den Polymerfedern 10, 11 vorbei in das Gehäuse 6 der Elastomerfedereinrichtung 3.

Die "Sperrung" des Zwischentellers 12 durch die Kugeln 20, 22 wird durch einen "Ziehkeil 24" erreicht. Bei dem "Ziehkeil 24 handelt es sich um ein hülsenartiges Element, das auf dem Außenumfang des Dämpfergehäuses 4 in Federbeinlängsrichtung 7 verschieblich ist. Der Ziehkeil 24 weist an seinem Außenumfang 2 in Federbeinlängsrichtung 7 voneinander beabstandete umlaufenden keilförmige bzw. wulstartige Erhebungen 25, 26 auf. In der hier gezeigten Verschiebestellung des Ziehkeils 24 befindet sich die Erhebung 25 "auf Höhe" der Kugeln 20, 22 und drückt diese radial nach außen in die umlaufende Nut 14 des Zwischentellers 12. Der Ziehkeil 24 stellt sicher, dass die Kugeln 20, 22 bei einer Belastung des Federbeins nach nicht radial nach innen aus der umlaufenden V-förmigen Nut 14 herausgedrückt werden, was ein "Lösen" des Zwischentellers 12 zur Folge hätte.

Verschiebt man den Ziehkeil 24 nach unten, so dass sich der Bereich zwischen den beiden Erhebungen 25, 26 auf Höhe der Kugeln 20, 22 befindet, so können die beiden Kugeln 20, 22 nach innen aus der V-förmigen Einkerbung 14 heraus gleiten. Die beiden Zwischenteller 12, 13 sind dann frei in Federbeinlängsrichtung 7 im Gehäuse 6 verschieblich, so dass die Gesamtfederrate des Federbeins 1 durch die Federrate der Spiralfeder 2 und die Federraten der Polymerfedern 9, 10, 11 bestimmt ist.

Verschiebt man den Ziehkeil 24 aus der in Figur 1 gezeigten Stellung ein Stück weit nach oben, so werden die Kugeln 20, 22 freigegeben und können ein Stück weit nach innen aus der V-förmigen Einkerbung 14 heraus gleiten. Gleichzeitig drückt die Erhebung 26 die Kugeln 21, 23 radial nach außen in die V-förmige Einkerbung 15. In dieser Stellung ist der Zwischenteller 12 frei in Federbeinlängsrichtung im Gehäuse 6 verschieblich. Der Zwischenteller 13 hingegen ist durch die Kugeln 21, 23 gegen eine Verschiebung in Federbeinlängsrichtung gesperrt. Folglich ergibt sich die Gesamtfederrate des Federbeins 1 aus den Federraten der Spiralfeder 2 und den Federraten der Polymerfedern 9, 10.

Alternativ zu dem hier gezeigten Ausführungsbeispiel mit drei Polymerfedern und zwei Zwischentellern können auch mehr Elastomerfedern in Reihe hintereinander geschaltet werden, was dann eine noch feinere einstellung der Gesamtfederrate des Federbeins 1 ermöglicht.

Wenngleich in der in Figur 1 gezeigten Darstellung in jeder Zwischentellerebene nur zwei Kugeln zu sehen sind, können selbstverständlich in Umfangsrichtung des jeweiligen Zwischentellers auch mehrere bzw. eine Vielzahl derartiger Kugeln angeordnet sein. Alternativ zu dem in Figur 1 gezeigten Ausführungsbeispiel, können anstatt von Kugeln 20 - 23 auch Stifte oder andere Formschlusskörper verwendet werden.

Beim Schalten bzw. Verschieben des Ziehkeils 24 ist zu erwarten, dass aufgrund der momentanen Stellung bzw. Bewegung des Federbeins die Zwischenteller "außer Position" sein werden und sich die zugeordneten Kugeln nicht sofort einrasten lassen, was zur Folge hat, dass der Ziehkeil 24 vorübergehend blockiert ist. Um dennoch ein "Schalten" des Ziehkeils zu ermöglichen, kann zwischen einer Ziehkeilbetätigungseinrichtung, z. B. einem zugeordneten Elektromotor, und dem Ziehkeil eine "Vorspanneinrichtung" angeordnet sein, die, wenn der Ziehkeil vorübergehend blockiert ist, eine entsprechende Vorspannung auf den Ziehkeil ausübt und den Ziehkeil in die gewünschte Schaltstellung verschiebt, sobald die Zwischenteller sich in einer geeigneten Position befinden. Bewegt sich der Zwischenteller in die "Flucht" der Kugelebene, so werden die zugeordneten Kugeln durch die Federvorspannung in die Ringnut des Zwischentellers gedrückt und der Schaltvorgang ist beendet.

Die Geometrie der inneren Gehäusewand des Gehäuses 6, des Ziehkeils 24 und der Kugeln 20 - 23 ist so aufeinander abgestimmt, dass keine der Kugeln 20 - 23 in den Zwischenraum zwischen der radial inneren Gehäusewandung des Gehäuses 6 und den Ziehkeil 24 gelangen können.

**Patentansprüche**

1. Fahrzeug, insbesondere Motorrad, mit einem Federbein (1), das folgende Merkmale aufweist:

   - eine Spiralfeder (2),
   - eine seriell zu der Spiralfeder (2) angeordnete Elastomerfedereinrichtung (3), die mindestens ein seriell zu der Spiralfeder (2) angeordnetes Elastomerelement (10, 11) und mindestens eine dem Elastomerelement (10, 11) zugeordnete Sperreinrichtung (12, 13; 20 - 23) aufweist, welche dazu vorgesehen ist, in einer Freigabestellung eine Kompression des zugeordneten Elastomerelements (10, 11) zu ermöglichen bzw. in Sperrstellung zu sperren, **dadurch gekennzeichnet, dass** die mindestens eine Sperreinrichtung (12, 13, 20 - 23) in einer Radialrichtung des Federbeins (1) von der Freigabestellung in die Sperrstellung verschiebbar ist, und umgekehrt, wobei in der Sperrstellung eine in das Federbein (1) eingeleitete Federbeinkraft mittels der Sperreinrichtung (12, 13; 20 - 23) an dem zugeordneten Elastomerelement (10, 11) vorbei geleitet wird.

2. Fahrzeug nach Anspruch 1, **dadurch gekennzeichnet, dass** die Elastomerfedereinrichtung (3) ein Gehäuse (6) aufweist, in dem das mindestens eine Elastomerelement (10, 11) und die zugeordnete Sperreinrichtung (12, 13; 20 - 23) angeordnet ist.

3. Fahrzeug nach Anspruch 2, **dadurch gekennzeichnet, dass** das Gehäuse (6) ein ringzylindrisches Gehäuse ist, wobei die Sperreinrichtung (12, 13; 20 - 23) in einer Radialrichtung des Gehäuses (6) verschiebbar ist.

4. Fahrzeug nach einem der Ansprüche 2 oder 3, **dadurch gekennzeichnet, dass** in dem Gehäuse (6) seriell hintereinander mehrere Elastomerfederelemente (10, 11) angeordnet sind, wobei jedem der Elastomerfederelemente jeweils eine separate in einer Radialrichtung des Gehäuses (6) verschiebbare Sperreinrichtung (12, 13; 20 - 23) zugeordnet ist.

5. Fahrzeug nach einem der vorangehenden Ansprüche, **dadurch gekennzeichnet, dass** zwischen zwei in Federbeinlängsrichtung (7) aufeinander folgenden Elastomerfederelementen (9, 10; 10, 11) jeweils ein erstes in Radialrichtung im wesentlichen unverschiebliches Sperrelement (12, 13) angeordnet ist, das mit einem zweiten in Radialrichtung verschieblichen Sperrelement (20, 22; 21, 23) in Eingriff bringbar ist.

6. Fahrzeug nach einem der vorangehenden Ansprüche, **dadurch gekennzeichnet, dass** in einer Innenwandung des ringzylindrischen Gehäuses (6) in Höhe der zweiten Sperrelemente (20, 22; 21, 23) jeweils eine Durchgangsöffnung (16-19) vorgesehen ist über die die einzelnen zweiten Sperrelemente (20, 22; 21, 23) zugänglich sind, wobei die zweiten Sperrelemente (20, 22; 21, 23) in die zugeordnete Durchgangsöffnung (16-19) hineinragen.

7. Fahrzeug nach einem der Ansprüche 5 oder 6, **dadurch gekennzeichnet, dass** die zweiten Sperrelemente durch Kugeln (20 - 23) gebildet sind.

8. Fahrzeug nach einem der Ansprüche 5 oder 6, **dadurch gekennzeichnet, dass** die zweiten Sperrelemente durch Sperrstifte gebildet sind.

9. Fahrzeug nach einem der vorangehenden Ansprüche, **dadurch gekennzeichnet, dass** ein hülsenartiger in Federbeinlängsrichtung (7) verschieblich angeordneter Ziehkeil vorgesehen ist, an dessen Außenumfang mindestens eine Erhebung vorgesehen ist, die dazu vorgesehen ist, das bzw. die zweiten Sperrelemente(20, 22; 21, 23) in die zugeordneten Durchgangsöffnungen (16-19) radial nach außen zu drücken und in die ersten Sperrelemente formschlüssig einzurasten.

**Claims**

1. A vehicle, especially a motorcycle, with a suspension strut (1), having the following features:

   - a spiral spring (2),
   - an elastomer spring device (3) which is arranged serially with respect to the spiral spring (2) and has at least one elastomer element (10, 11) arranged serially with respect to the spiral spring (2) and at least one locking device (12, 13; 20 - 23) associated with the elastomer element (10, 11), which locking device is provided to allow a compression of the associated elastomer element (10, 11) in a release position or to lock it in the locking position, **characterised in that** the at least one locking device (12, 13, 20 - 23) can be displaced in a radial direction of the suspension strut (1) from the release position into the locking position and vice versa, wherein, in the locking position, a suspension strut force introduced into the suspension strut (1) is guided past the associated elastomer element (10, 11) by means of the locking device (12, 13; 20 - 23).

2. A vehicle according to claim 1, **characterised in that** the elastomer spring device (3) has a housing (6), in which the at least one elastomer element (10, 11) and the associated locking device (12, 13; 20 - 23) are arranged.

3. A vehicle according to claim 2, **characterised in that** the housing (6) is an annular cylindrical housing, the locking device (12, 13; 20 - 23) being displaceable in a radial direction of the housing (6).

4. A vehicle according to either of claims 2 or 3, **characterised in that** a plurality of elastomer spring elements (10, 11) is arranged in the housing (6) serially one behind the other, a separate locking device (12, 13; 20 - 23), which is displaceable in the radial direction of the housing (6), being associated, in each case, with each of the elastomer spring elements.

5. A vehicle according to any one of the preceding claims, **characterised in that** a first respective locking element (12, 13), which is substantially non-displaceable in the radial direction and can be engaged with a second locking element (20, 22; 21, 23), which is displaceable in the radial direction, is arranged between two elastomer spring elements (9, 10; 10, 11) following one another in the suspension strut longitudinal direction (7).

6. A vehicle according to any one of the preceding claims, **characterised in that** a respective through-opening (16 - 19), via which the individual second locking elements (20, 22; 21, 23) are accessible, is provided in an inner wall of the annular cylindrical housing (6) at the level of the second locking elements (20, 22; 21, 23), the second locking elements (20, 22; 21, 23) projecting into the associated through-opening (16 - 19).

7. A vehicle according to either of claims 5 or 6, **characterised in that** the second locking elements are formed by balls (20 - 23).

8. A vehicle according to either of claims 5 or 6, **characterised in that** the second locking elements are formed by locking pins.

9. A vehicle according to any one of the preceding claims, **characterised in that** a sleeve-like draw key displaceably arranged in the suspension strut longitudinal direction (7) is provided, on the outer periphery of which at least one elevation is provided, which is provided to press the second locking element(s) (20, 22; 21, 23) radially outwardly into the associated through-openings (16 - 19) and to positively latch them in the first locking elements.

**Revendications**

1. Véhicule, notamment motocycle comportant une jambe de ressort (1) ayant les caractéristiques suivantes :

   - un ressort hélicoïdal (2),
   - une installation de ressort à élastomère (3) en série avec le ressort hélicoïdal (2) et ayant au moins un élément en élastomère (10, 11) monté en série avec le ressort hélicoïdal (2) et au moins une installation de blocage (12, 13 ; 20-23) associée à l'élément en élastomère (10, 11) et prévue pour, en position de libération, permettre la compression de l'élément en élastomère (10, 11) associé, ou en position de blocage pour bloquer cette compression,

**caractérisé en ce qu'**
au moins l'installation de blocage (12, 13 ; 20-23) peut coulisser dans la direction radiale de la jambe de ressort (1) de la position de libération à la position de blocage et inversement, et en position de blocage, la force injectée dans la jambe de ressort (1) passe à côté de l'élément en élastomère (10, 11) associé par l'intermédiaire de l'installation de blocage (12, 13 ; 20-23).

2. Véhicule selon la revendication 1,
   **caractérisé en ce que**
   l'installation de ressort à élastomère (3), comporte un boîtier (6) dans lequel est logé au moins un élément en élastomère (10, 11) et l'installation de blocage (12, 13 ; 20-23) associée.

3. Véhicule selon la revendication 2,
   **caractérisé en ce que**
   le boîtier (6) est un boîtier cylindrique annulaire et l'installation de blocage (12, 13 ; 20-23) coulisse dans la direction radiale du boîtier (6).

4. Véhicule selon la revendication 2 ou 3,
   **caractérisé en ce que**
   le boîtier (6) loge plusieurs éléments de ressort en élastomère (10, 11) en série l'un derrière l'autre et à chacun des éléments de ressort en élastomère, est associée une installation de blocage (12, 13 ; 20-23) coulissant séparément dans une direction radiale du boîtier (6).

5. Véhicule selon les revendications précédentes,
   **caractérisé en ce que**
   chaque fois un premier élément de blocage (12, 13) pratiquement non coulissant dans la direction radiale, est prévu entre deux éléments de ressort en élastomère (9, 10 ; 10, 11) qui se suivent dans la direction longitudinale (7) de la jambe à ressort à savoir un premier élément de blocage (12, 13) pratiquement non coulissant installé dans la première direction radiale et qui peut être mis en prise avec un second élément de blocage (20, 22 ; 21, 23) coulissant dans la direction radiale.

6. Véhicule selon les revendications précédentes,
   **caractérisé en ce que**
   la paroi intérieure du boîtier cylindrique annulaire (6) présente à la hauteur des seconds éléments de blocage (20, 22 ; 21, 23), chaque fois un orifice traversant (16-19) par lequel les différents seconds éléments de blocage (20, 22 ; 21, 23) sont accessibles et les seconds éléments de blocage (20, 22 ; 21, 23) pénètrent dans l'orifice traversant (16-19) associé.

7. Véhicule selon la revendication 5 ou 6,
   **caractérisé en ce que**
   les seconds éléments de blocage sont formés par des billes (20-23).

8. Véhicule selon la revendication 5 ou 6,
   **caractérisé en ce que**
   les seconds éléments de blocage sont constitués par des broches de blocage.

9. Véhicule selon les revendications précédentes,
   **caractérisé en ce qu'**
   un coin de traction, en forme de manchon est monté de manière coulissante dans la direction longitudinale de la jambe à ressort (7) et sa périphérie extérieure comporte au moins un bossage pour pousser le ou les seconds éléments de verrouillage (20, 22 ; 21, 23) dans les orifices de passage (16-19) associés, en les poussant radialement vers l'extérieur et en les accrochant par une liaison par la forme dans les premiers éléments de blocage.

EP 1 958 802 B1

FIG.1

7

**IN DER BESCHREIBUNG AUFGEFÜHRTE DOKUMENTE**

**In der Beschreibung aufgeführte Patentdokumente**

- US 4248410 A